# EUROPÄISCHE PATENTSCHRIFT

(11) **EP 2 743 018 B1**
(45) Veröffentlichungstag und Bekanntmachung des Hinweises auf die Patenterteilung: **16.12.2015**
(21) Anmeldenummer: 12008391.0
(22) Anmeldetag: 17.12.2012
(51) Int. Cl.: B23B 29/20, B23B 29/04

(54) **Werkzeugschnellspannvorrichtung**
Quick clamping device for a tool
Dispositif de serrage rapide d'outil

(43) Veröffentlichungstag der Anmeldung: 18.06.2014
(73) Patentinhaber: Haberland Zerspanungstechnik GmbH, 49326 Melle-Gesmold (DE)
(72) Erfinder: Haberland, Dirk, 49326 Melle-Gesmold (DE); Föst, Andreas, 49324 Melle-Gesmold (DE)
(74) Vertreter: Siekmann, Gunnar

(56) Entgegenhaltungen:
- DE-A1-102005 045 662
- DE-A1-102010 022 435
- US-A- 4 080 854

## Beschreibung

Die Erfindung betrifft eine Werkzeugschnellspannvorrichtung für einen Werkzeugrevolver einer Drehmaschine mit einer dem Werkzeugrevolver zugeordneten Grundaufnahme und einem der Grundaufnahme zugeordneten Satz feststehend aufnehmbarer Werkzeughalter.

Bisher umfassen entsprechende Werkzeughaltersätze lediglich Bohrstangenaufnahmen mit unterschiedlich großen Durchmessern, die dann in einer Grundaufnahme eingespannt werden können. Um an einem Werkzeugrevolver mit mehreren Stationen auch spanabhebende Werkzeuge einsetzen zu können, werden eine Vielzahl weiterer Grundaufnahmen und Werkzeughalter benötigt. Bei diesen ist dann lediglich die Montage dieser an den Stationen des Werkzeugrevolvers standardisiert. Eine solche Festlegeeinrichtung eines Werkzeughalters an einem Werkzeugrevolver geht aus der DE 10 2005 045 662 A1 hervor, die mittels einer Adapterplatte in einer vorbestimmten Position an dem Werkzeugrevolver ausgerichtet ist. Dazu weisen die Adapterplatte und die Festlegeeinrichtung des Werkzeughalters ineinander greifende Passkörper der Adapterfläche und Vertiefungen in einer Anlagefläche der Festlegeeinrichtung auf, die in vorbestimmter Weise zusammensetzbar sind. Im Weiteren unterscheiden sich die Grundaufnahmen und die Werkzeughalter je nach Werkzeug und vor allem auch je nach Werkzeugrevolver zum Teil deutlich voneinander, so dass Werkzeugschnellspannvorrichtungen immer nur für spezielle Werkzeuge und gleiche Werkzeugrevolver geeignet sind.

Um die Werkzeuge an dem Werkzeugrevolver auszuwechseln, müssen, abgesehen von den wenigen Sätzen mit verschiedenen Bohrstangenaufnahmen, zumeist die gesamten Werkzeugschnellspannvorrichtungen ausgetauscht werden. In jedem Fall müssen bei einem Wechsel wenigstens mehrere Schrauben gelöst, das passende Werkzeug bzw. der Werkzeughalter, häufig benötigte Zwischenausgleichsstücke zum Einspannen des Werkzeugs bzw. des Werkzeughalters sowie die jeweilige Grundaufnahme herausgesucht und zusammengesetzt werden.

In der US 4080854 A ist beispielsweise eine Werkzeugschnellspannvorrichtung offenbart, bei der mittig eine Spannschraube eines Werkzeughalterbefestigers in eine Aufnahmeausnehmung hineinragt. An der Spannschraube kann ein Werkzeughalter in der Aufnahmeausnehmung gesichert werden, wobei der in der Aufnahmeausnehmung aufgenommene Werkzeughalter mit wenigstens einem weiteren, außermittig angeordneten Befestigungsmittel gegen Verdrehen zu sichern ist. Dieses Befestigungsmittel ist parallel zu der Spannschraube in einem in die Aufnahmeausnehmung einführbaren Schaft des Werkzeughalters festsetzbar. Für einen Werkzeugwechsel müssen damit immer wenigstens die Spannschraube und das zusätzliche Befestigungsmittel gelöst werden.

Werkzeughalter und Grundaufnahme sind daher, insbesondere bei Werkzeugschnellspannvorrichtungen mit Wendeplattenhalteraufnahmen häufig auch einteilig ausgebildet. Nach dem Wechsel einer Werkzeugschnellspannvorrichtung muss die neue Werkzeugschnellspannvorrichtung, sofern dies möglich ist, dann wieder an dem Werkzeugrevolver ausgerichtet werden. Eine an einem Werkzeughalter ausrichtbare Festlegeeinrichtung ist aus der DE 10 2010 022 435 A1 bekannt. Diese besteht aus einer Grundaufnahme und einem Adapterteil, welches derart seitlich an die Grundaufnahme ansetzbar ist, dass die Grundaufnahme und das Adapterteil jeweils flächig an eine gemeinsame Anlagefläche eines Werkzeugrevolvers anlegbar sind. Zur lagegenauen Positionierung des jeweiligen Werkzeughalters weist die Festlegeeinrichtung eine Justiereinrichtung auf, die aus mindestens einem konischen Eingriffsabschnitt eines Steuerteils an dem Werkzeugrevolver und einem konischen Aufnahmeabschnitt des Adapterteils besteht. Dem Adapterteil kann in weiterer Ausgestaltung eine Feinverstellung zwischen dem Adapterteil und dem Werkzeugrevolver zugeordnet sein. Diese Feinverstellung umfasst dann wenigstens eine Madenschraube, mit der auf das Steuerteil des Werkzeugrevolvers Druck ausgeübt werden kann, um die Festlegeeinrichtung, bestehend aus Adapterteil und Grundaufnahme, als Ganzes zu dem Werkzeugrevolver zu verstellen. Der Wechsel eines Werkzeugs erfordert daher bisweilen lange Rüstzeiten.

Aufgabe der Erfindung ist es, eine variabel einsetzbare Werkzeugschnellspannvorrichtung bereitzustellen, mit der verschiedene Werkzeuge an einem Werkzeugrevolver gehalten werden können und die gleichzeitig kürzere Rüstzeiten ermöglicht.

Die Lösung dieser Aufgabe erfolgt mit einer Werkzeugschnellspannvorrichtung mit den Merkmalen des Patentanspruchs 1. Weiterbildungen und vorteilhafte Ausgestaltungen sind in den Unteransprüchen angegeben.

Eine Werkzeugschnellspannvorrichtung für einen Werkzeugrevolver einer Drehmaschine mit einer dem Werkzeugrevolver zugeordneten Grundaufnahme und einem der Grundaufnahme zugeordneten Satz feststehend aufnehmbarer Werkzeughalter zeichnet sich erfindungsgemäß dadurch aus, dass der Grundaufnahme eine Revolveradapterplatte zugeordnet ist, und dass zwischen der Revolveradapterplatte und der Grundaufnahme eine Feinverstellung ausgebildet ist, so dass die Grundaufnahme unabhängig von dem Werkzeugrevolver zu der Revolveradapterplatte verschoben werden kann. Mit der Feinverstellung kann die Grundaufnahme mit dem jeweiligen Werkzeughalter gegenüber der an einem Werkzeugrevolver befestigten Revolveradapterplatte exakt ausgerichtet werden, ohne dass die gesamte Werkzeugschnellspannvorrichtung an dem Werkzeugrevolver gelöst werden muss. Während die Revolveradapterplatte beim Ausrichten somit fest mit dem Werkzeugrevolver verbunden ist, wird die Grundaufnahme von der Revolveradapterplatte nur soweit gelöst, bis diese zu der Revolveradapterplatte verschoben werden kann.

Dazu sind der Grundaufnahme und der Revolveradapterplatte vorteilhafterweise Revolververbindungsmittel und von den Revolververbindungsmitteln unabhängige Grundaufnahmefestsetzmittel zugeordnet. Die Revolververbindungsmittel dienen dann der Befestigung der Werkzeugschnellspannvorrichtung an dem Werkzeugrevolver, während die Grundaufnahme mit den Grundaufnahmefestsetzmitteln an der Revolveradapterplatte festsetzbar ist. Zur Befestigung der Werkzeugschnellspannvorrichtung an dem Werkzeugrevolver sind in einer bevorzugten Ausgestaltung insgesamt vier Schrauben als Revolververbindungsmittel an Ecken der zumeist rechteckigen Revolveradapterplatte vorgesehen. Diese Revolververbindungsmittel werden in durchgehende Bohrungen der Grundaufnahme eingesetzt, wobei die Revolververbindungsmittel durch die Revolveradapterplatte hindurch mit gegenüber der Revolveradapterplatte vorstehenden Enden an dem Werkzeugrevolver festsetzbar sind. Die Grundaufnahme und die Revolveradapterplatte werden bevorzugt mit zwei weiteren Schrauben, den Grundaufnahmefestsetzmitteln, miteinander verbunden, die parallel zu den Revolververbindungsmitteln und zwischen jeweils zwei der Revolververbindungsmittel in der Grundaufnahme angeordnet sind.

Den Grundaufnahmefestsetzmitteln ist zusätzlich noch die Feinverstellung zugeordnet, die vorteilhafterweise wenigstens eine Exzenterschraube aufweist, um die Grundaufnahme zu einer an einem Werkzeugrevolver befestigten Revolveradapterplatte exakt ausrichten zu können. Die Exzenterschraube ist parallel zu den Revolververbindungsmitteln und den Grundaufnahmefestsetzmitteln in einer Bohrung der Grundaufnahme gelagert und weist einen exzentrisch zu ihrer Längsachse angeordneten Schraubenkopf auf, der in eine Aussparung der Revolveradapterplatte hineinragt. Die Grundaufnahme kann dann durch Drehen der Exzenterschraube gegenüber der Revolveradapterplatte bewegt und exakt an einem Werkzeugrevolver ausgerichtet werden. Damit die Exzenterschraube nicht aus der Grundaufnahme herausrutscht, ist diese zusätzlich durch eine Madenschraube an der Grundaufnahme gesichert.

Die Grundaufnahme und die Revolveradapterplatte sind weiterhin standardisiert, das heißt unabhängig vom jeweiligen Werkzeughalter einheitlich ausgebildet, und verbleiben bei einem Werkzeugwechsel an dem Werkzeugrevolver, so dass nur der Werkzeughalter mit dem jeweiligen Werkzeug ausgetauscht werden muss und nicht die gesamte Werkzeugschnellspannvorrichtung. Der zweiteilige Aufbau der Werkzeugschnellspannvorrichtung aus Grundaufnahme und Revolveradapterplatte ermöglicht zudem eine Anpassung an verschiedene Werkzeugrevolver, in dem einer standardisierten Grundaufnahme mehrere unterschiedliche Revolveradapterplatten mit an unterschiedliche Werkzeugrevolver angepassten Revolververbindungsmitteln zugeordnet werden. Die Revolververbindungsmittel der jeweiligen Revolveradapterplatte können sich dabei in Position, Form und Anzahl je nach Werkzeugrevolver unterscheiden.

Um den Werkzeughalter sicher aufnehmen und halten zu können, weist die Grundaufnahme vorteilhafterweise wenigstens eine Aufnahmeausnehmung für einen Werkzeughalter auf, die eine werkstückbearbeitungsseitige Aufnahmeöffnung aufweist, wobei der Aufnahmeöffnung gegenüberliegend ein der Aufnahmeausnehmung zugeordneter Werkzeughalterbefestiger an der Grundaufnahme ausgebildet ist. Mit dem gegenüberliegend zu der Aufnahmeöffnung angeordneten Werkzeughalterbefestiger wird der jeweilige Werkzeughalter auf einfache Weise gegen ein Herausrutschen aus der Aufnahmeausnehmung gesichert, in dem der Werkzeughalter mit dem Werkzeughalterbefestiger in der Aufnahmeausnehmung festgezogen wird. Der Werkzeughalterbefestiger weist dazu vorteilhafterweise eine Spannschraube mit einem Haltering auf, so dass durch Anziehen oder Lösen der Spannschraube ein Werkzeughalter in der Grundaufnahme eingespannt oder gelöst werden kann. Die Spannschraube wird dabei in den Werkzeughalter hineingedreht und mit dem Haltering gegenüber der Grundaufnahme in Position gehalten. Beim Lösen der Spannschraube kann der zuvor festgesetzte Werkzeughalter für eine leichtere Entnahme zudem ausgerückt werden, um eine einfachere Entnahme des Werkzeughalters zu ermöglichen. Dadurch, dass für einen Werkzeugwechsel nur die eine Spannschraube festgezogen oder gelöst werden muss, und das erneute Ausrichten der Werkzeugschnellspannvorrichtung bei einem Werkzeugwechsel aufgrund der an dem Werkzeugrevolver verbleibenden Grundaufnahme entfällt, können gegenüber dem Stand der Technik deutlich kürzere Rüstzeiten erreicht werden, die weniger als 20 %, insbesondere nur circa 15 %, der bisherigen Rüstzeiten betragen.

Damit beim Arbeiten auf das Werkzeug einwirkende Lasten über den Werkzeughalter möglichst gleichmäßig in die Grundaufnahme eingeleitet werden und daraus folgende Spannungen beim Arbeiten vermieden werden, ist vorgesehen, dass der Werkzeughalterbefestiger in Aufspannrichtung des Werkzeughalters mittig in die Aufnahmeausnehmung hineinragt. Der Werkzeughalterbefestiger weist dann eine gemeinsame Mittenachse mit einer in der Grundaufnahme gehaltene Bohrstangenaufnahme auf.

Um Werkzeughalter für unterschiedliche Werkzeuge in die gleiche Grundaufnahme einspannen zu können, ist vorgesehen, dass die Werkzeughalter einen standardisierten Einspannschaft aufweisen, der mit dem Werkzeughalterbefestiger in der Aufnahmeausnehmung der Grundaufnahme festsetzbar ist. Dieser Einspannschaft weist wie auch die Aufnahmeausnehmung für den Werkzeughalter in einer bevorzugten Ausführungsform eine zylindrische Grundform auf. An einer dem Werkzeughalterbefestiger zugewandten Stirnseite des Einspannschaftes kann mittig zudem eine Gewindebohrung vorgesehen sein, in die die Spannschraube des Werkzeughalterbefestigers eingreifen kann. Zur Kühlung kann der Einspannschaft wenigstens eine Nut aufweisen, um Wasser an bzw. in den Werkzeughalter einzuleiten. In der Grundaufnahme sind dann entsprechende Kühlwasserzuleitungen vorzusehen.

Die Werkzeughalter unterscheiden sich lediglich hinsichtlich der einzusetzenden Werkzeuge, wobei der Satz Werkzeughalter vorteilhafterweise sowohl Werkzeughalter mit einer Wendeplattenhalteraufnahme für zerspanende beziehungsweise spanabhebende Arbeiten als auch Werkzeughalter mit Bohrstangen- und/oder Spannzangenaufnahme umfasst. Da die Werkzeughalter abgesehen von dem Einspannschaft zum Einspannen in der Grundaufnahme keine weiteren Gemeinsamkeiten aufweisen müssen, können werkzeugseitig höchst unterschiedliche Formen der Werkzeughalter ausgebildet werden, um die bestehende Vielfalt unterschiedlicher Werkzeuge in dem Werkzeughalter aufzunehmen. Dabei ist eine Nachrüstung der Werkzeugschnellspannvorrichtung möglich, ohne dass gleichzeitig das gesamte für eine Drehmaschine vorhandene Werkzeug ausgetauscht werden muss. Im Wesentlichen werden sogar nur wenige Werkzeughalter für viele verschiedene Werkzeuge benötigt. Jedem Werkzeughalter kann zudem ein Werkzeug fest zugeordnet sein. Werkzeug und Werkzeughalter müssen dann vor einem Werkzeugwechsel nicht mehr vormontiert werden, so dass nochmals kürzere Rüstzeiten erreicht werden.

Allen Werkzeughaltern gemein ist dabei eine gegenüber dem Stand der Technik große, insbesondere wenigstens doppelt so große Einspanntiefe in der Grundaufnahme, so dass höhere Lasten aufgenommen werden können. In einer bevorzugten Ausgestaltung beträgt die Einspanntiefe der Werkzeughalter in der Aufnahmeausnehmung wenigstens 90 mm.

Weiter ist vorgesehen, dass der jeweilige Werkzeughalter mit einem Verzahnring der Grundaufnahme korrespondierende Verzahnungsmittel aufweist, die formschlüssig an den Verzahnring angesetzt werden können. Über die Verzahnungsmittel ist der Werkzeughalter dann in einer vorbestimmten Position zu der Grundaufnahme festgelegt, wobei der Verzahnring eine Sollbruchstelle darstellt. Diese Sollbruchstelle dient als eine Überlastsicherung und verhindert größere Beschädigungen an der jeweiligen Werkzeugschnellspannvorrichtung und/oder dem Werkzeugrevolver, in dem Zähne des Verzahnrings bei einer vorbestimmten Last abgeschert werden. Der Verzahnring ist daher vorteilhafterweise lösbar mit der Grundaufnahme verbunden und kann im Bedarfsfall, das heißt zum Beispiel bei Beschädigungen, auf einfache Weise ausgetauscht werden. In weiterer Ausgestaltung ist der Verzahnring unmittelbar an der Aufnahmeöffnung angeordnet und begrenzt diese. Der Werkzeughalterbefestiger zieht den Werkzeughalter dann gegen den Verzahnring fest, so dass die Zähne des Verzahnrings und die mit dem Verzahnring korrespondierenden Verzahnungsmittel des Werkzeughalters formschlüssig ineinandergreifen.

Die Erfindung betrifft weiterhin auch einen Werkzeugrevolver einer Drehmaschine, an den wenigstens eine Werkzeugschnellspannvorrichtung ansetzbar ist, wobei die Werkzeugschnellspannvorrichtung durch die vorbezeichneten Merkmale gekennzeichnet ist. Zudem betrifft die Erfindung eine Drehmaschine mit wenigstens einem Werkzeugrevolver, der dadurch gekennzeichnet ist, dass er wenigstens eine vorbezeichnete Werkzeugschnellspannvorrichtung aufweist.

Ein Ausführungsbeispiel der Erfindung ist in der Zeichnung dargestellt. Es zeigen:
- Fig. 1:: eine Grundaufnahme und eine Revolverkupplungsplatte einer erfindungsgemäßen Werkzeugschnellspannvorrichtung;
- Fig. 2:: ein erster Werkzeughalter der erfindungsgemäßen Werkzeugschnellspannvorrichtung;
- Fig. 3:: die erfindungsgemäße Werkzeugschnellspannvorrichtung mit der Grundaufnahme und der Revolveradapterplatte gemäß Fig. 1 sowie dem in die Grundaufnahme eingesetzten Werkzeughalter gemäß Fig. 2;
- Fig. 4:: ein zweiter Werkzeughalter der erfindungsgemäßen Werkzeugschnellspannvorrichtung;
- Fig. 5:: die erfindungsgemäße Werkzeugschnellspannvorrichtung mit der Grundaufnahme und der Revolveradapterplatte gemäß Fig. 1 sowie dem in die Grundaufnahme eingesetzten Werkzeughalter gemäß Fig. 4;
- Fig. 6:: eine teilgeschnittene Seitenansicht der erfindungsgemäßen Werkzeugschnellspannvorrichtung gemäß Fig. 3;
- Fig. 7:: einen Querschnitt durch die Werkzeugschnellspannvorrichtung gemäß Fig. 3 und Fig. 6; und
- Fig. 8:: einen erfindungsgemäßen Werkzeugrevolver mit an diesem befestigten Werkzeugschnellspannvorrichtungen gemäß Fig. 1 bis 7.

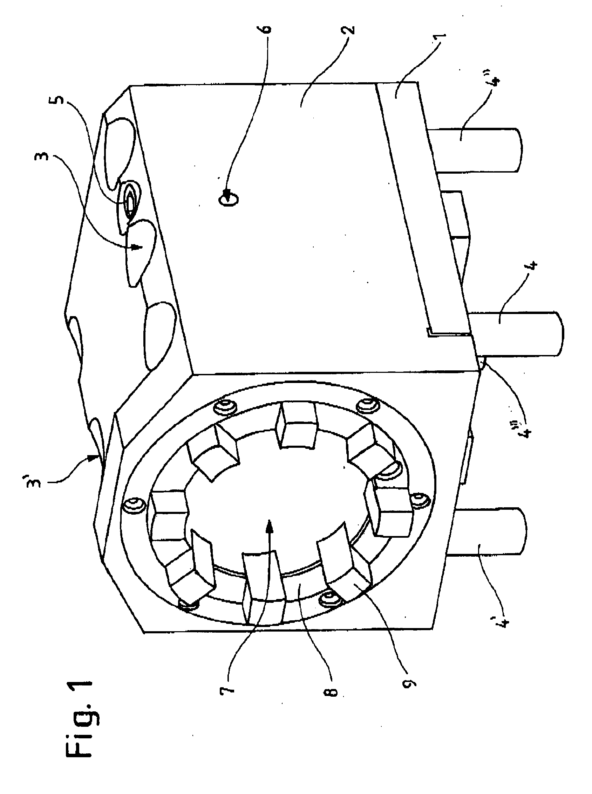

In Fig. 1 ist eine rechteckige Revolveradapterplatte 1 mit darauf angeordneter Grundaufnahme 2 dargestellt, wobei die Revolveradapterplatte 1 an einer Ausbuchtung einer Seitenwand der Grundaufnahme 2 anliegt. Die Revolveradapterplatte 1 und die Grundaufnahme 2 sind über zwei in Bohrungen der Grundaufnahme 2 versenkte Grundaufnahmefestsetzmittel 3, 3' miteinander verbunden. An den Ecken der Revolveradapterplatte 1 und der Grundaufnahme 2 sind Revolververbindungsmittel 4, 4', 4", 4'" zur Befestigung der Revolveradapterplatte 1 an einem Werkzeugrevolver vorgesehen. Jedem der Revolververbindungsmittel 4, 4', 4", 4"' ist eine weitere Bohrung in der Grundaufnahme 2 und der Revolveradapterplatte 1 zugeordnet, wobei die Revolververbindungsmittel 4, 4', 4", 4'" ausgehend von der Grundaufnahme 2 durch die Revolveradapterplatte 1 hindurch mit einem Ende gegenüber der Revolveradapterplatte 1 hervorstehen.

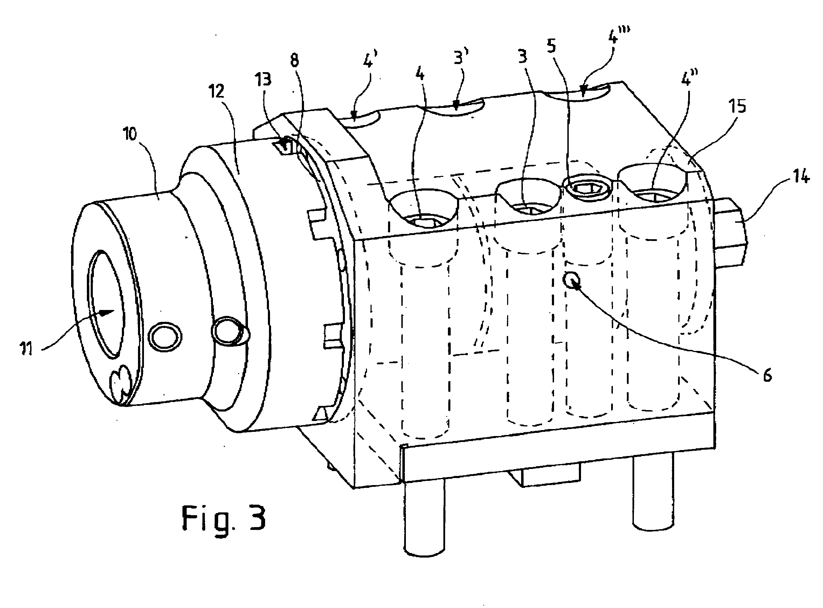

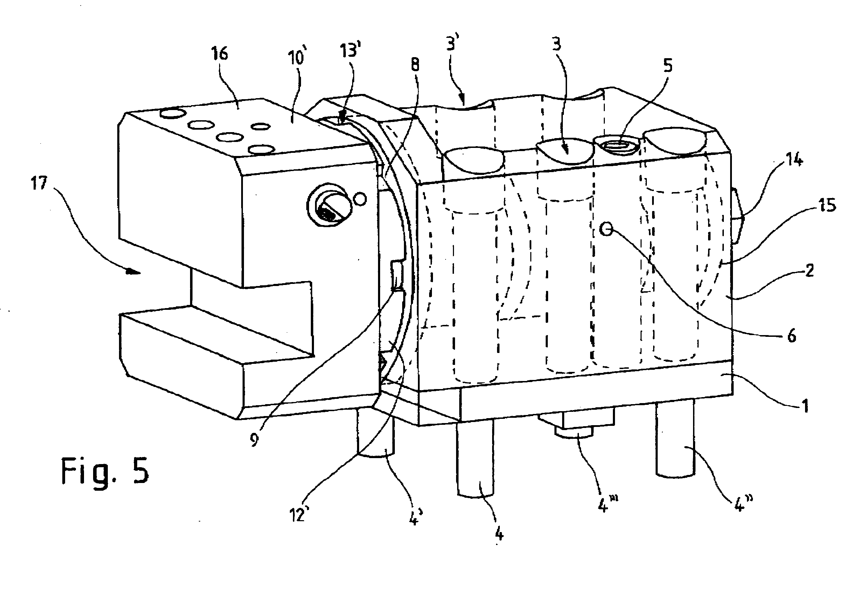

Die Lage der Grundaufnahmefestsetzmittel 3, 3' und der Revolververbindungsmittel 4, 4', 4", 4"' wird insbesondere auch in Fig. 3 und Fig.5 mit transparent dargestellter Grundaufnahme 2 deutlich, wobei die Grundaufnahmefestsetzmittel 3, 3' einander gegenüberliegend mittig zwischen den Revolververbindungsmitteln 4, 4" beziehungsweise den Revolververbindungsmitteln 4', 4'" in der Grundaufnahme 2 angeordnet sind. Das Grundaufnahmefestsetzmittel 3 und die Revolververbindungsmittel 4, 4" einerseits sowie das Grundaufnahmefestsetzmittel 3' und die Revolververbindungsmittel 4', 4'" andererseits sind dabei jeweils entlang einer geraden Linie in eine Ebene angeordnet.

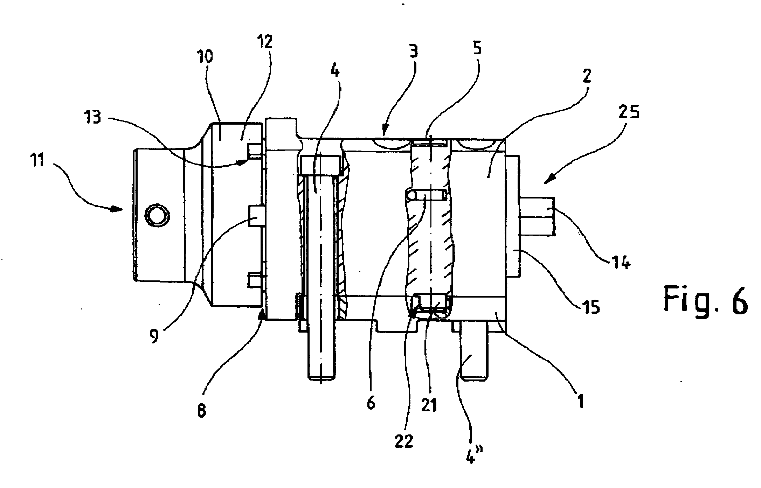

Der Revolveradapterplatte 1 und der Grundaufnahme 2 ist weiterhin eine Feinverstellung zugeordnet, die aus einer Exzenterschraube 5 und einer Madenschraube 6 zur Sicherung der Exzenterschraube 5 in der Grundaufnahme 2 zusammengesetzt ist. Dabei ragt die Exzenterschraube 5 mit einem in Fig. 6 dargestellten, exzentrisch zu ihrer Längsachse angeordneten Schraubenkopf 21 in eine Aussparung 22 der Revolveradapterplatte 1 hinein, so dass die Grundaufnahme 2 durch Drehen des Schraubenkopfes 21 zu der Revolveradapterplatte 1 verschiebbar ist.

In der Grundaufnahme 2 ist eine Aufnahmeausnehmung für einen Werkzeughalter ausgebildet. Diese Aufnahmeausnehmung 7 ist zwischen den beiden Grundaufnahmefestsetzmitteln 3, 3' sowie den Revolververbindungsmitteln 4, 4" auf einer Seite und den Revolververbindungsmitteln 4', 4"' auf der anderen Seite angeordnet und weist an einem Ende eine Aufnahmeöffnung auf, die von einem Verzahnring 8 eingefasst ist. Der Verzahnring 8 ist lösbar an der Grundaufnahme 2 gehalten und mit mehreren in gleichen Abständen zueinander angeordneten Zähnen 9 gegenüber einer Seitenwandebene der Grundaufnahme 2 hervorstehend.

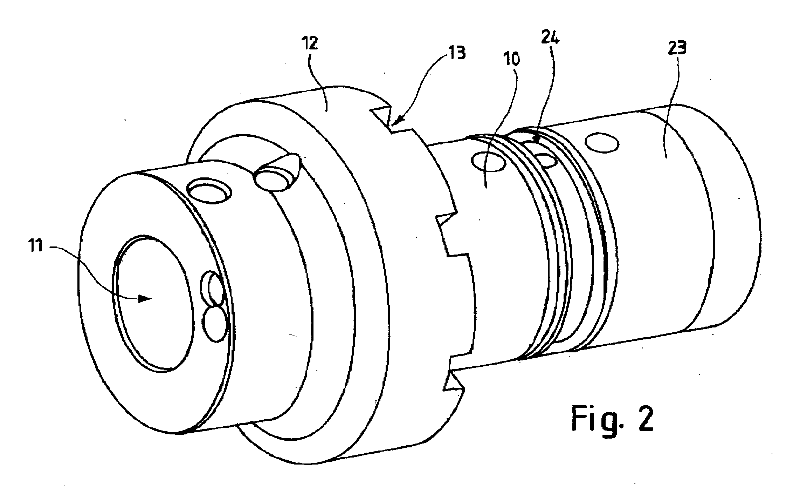

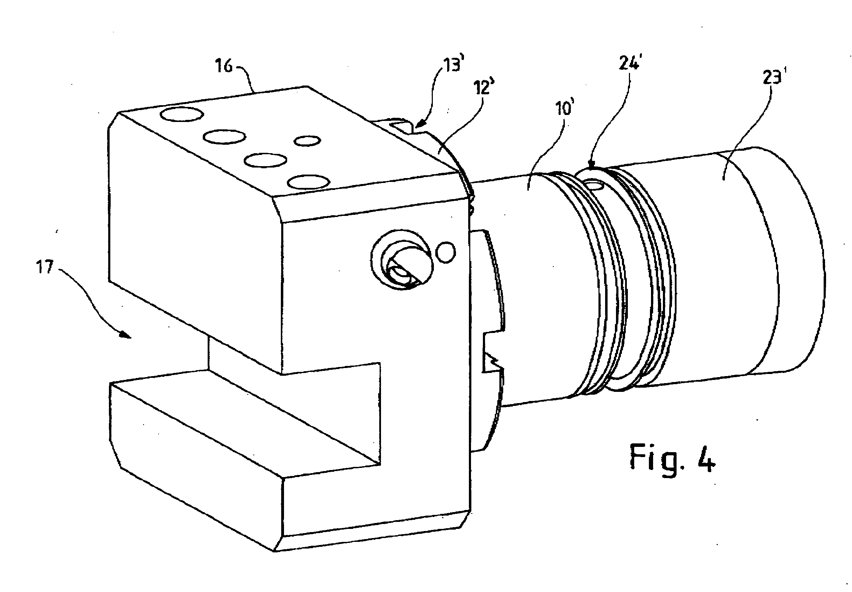

In die Aufnahmeausnehmung 7 können Werkzeughalter 10, 10' gemäß Fig. 2 oder Fig. 4 eingesetzt werden, wobei der Werkzeughalter 10 in Fig. 2 einen Einspannschaft 23 mit einer zylindrischen Grundform und eine Bohrstangenaufnahme 11 aufweist. An einem gegenüber der zylindrischen Grundform des Einspannschaftes 23 verbreiterten Ringabschnitt 12 des Werkzeughalters 10 sind mit den Zähnen 9 des Verzahnrings 8 formschlüssig in Verbindung zu bringende Verzahnungsmittel 13 ausgebildet. Weiterhin weist der Einspannschaft 23 eine Nut 24 für eine Kühlwasserzirkulation an dem Werkzeughalter 10 auf.

In Fig. 3 ist der Werkzeughalter 10 in die Aufnahmeausnehmung 7 der Grundaufnahme 2 eingesetzt, wobei die Grundaufnahme 2 transparent dargestellt ist. Der Werkzeughalter 10 ist an einer dem Verzahnring 8 entgegengesetzt angeordneten Seitenwand der Grundaufnahme 2 mit einem Werkzeughalterbefestiger 25 aus einer Spannschraube 14 und einem Haltering 15 an den Verzahnring 8 angezogen und damit mit dem Einspannschaft 23 in der Aufnahmeausnehmung 7 der Grundaufnahme 2 festgesetzt. Die Zähne 9 des Verzahnrings 8 und die Verzahnungsmittel 13 greifen dann formschlüssig ineinander.

Fig. 4 zeigt einen weiteren Werkzeughalter 10', der wie der Werkzeughalter 10 einen Einspannschaft 23' mit zylindrischer Grundform aufweist, mit der der Werkzeughalter 10', wie in Fig. 5 dargestellt, in die Aufnahmeausnehmung 7 der Grundaufnahme 2 eingeschoben und festgesetzt werden kann. Weiter weist der Werkzeughalter 10' auch einen gegenüber der zylindrischen Grundform verbreiterten Ringabschnitt 12' mit Verzahnungsmitteln 13' auf und wird auf gleiche Weise wie der Werkzeughalter 10 mit dem Werkzeughalterbefestiger 25 aus Spannschraube 14 und Haltering 15 an den Verzahnring 8 angezogen und in der Aufnahmeausnehmung 7 der Grundaufnahme 2 festgesetzt. Gegenüber dem Werkzeughalter 10 ist anstatt der Bohrstangenaufnahme 11 lediglich eine Wendeplattenhalteraufnahme 16 vorgesehen, an der Werkzeuge für zerspanende beziehungsweise spanabhebende Arbeiten gehalten werden können. Die Wendeplattenhalteraufnahme 16 ist quaderförmig ausgebildet, weist eine längliche Aussparung 17 für Wendeplattenhalter auf und schließt unmittelbar an den verbreiterten Ringabschnitt 12' an.

Der Fig. 6 ist die Anordnung der Exzenterschraube 5 sowie die Lage der Revolververbindungsmittel 4, 4', 4", 4'" in der Grundaufnahme 2 und der Revolveradapterplatte 1 anhand zweier aufgerissen dargestellter Bereiche im Detail zu entnehmen. Während die Revolververbindungsmittel 4, 4', 4", 4'" mit einem Endkopf an einer Querschnittsverengung der Bohrungen aufliegen und somit nicht nur die Revolveradapterplatte 1, sondern auch die Grundaufnahme 2 an einem Werkzeugrevolver halten, endet die Bohrung der Exzenterschraube 5 in der Aussparung 22 der Revolveradapterplatte 1 und ermöglicht mit ihrem exzentrisch zu ihrer Längsachse angeordneten Schraubenkopf 21 eine Feinverstellung der Grundaufnahme 2 zu der Revolveradapterplatte 1.

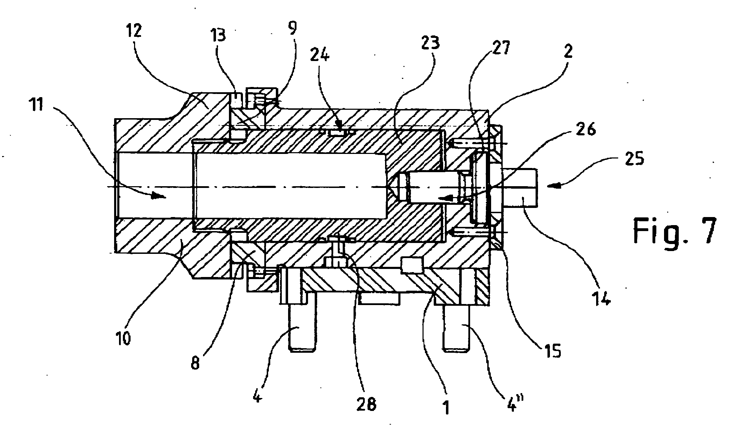

Aus Fig. 7 ist insbesondere der Werkzeughalterbefestiger 25 und sein Aufbau im Einzelnen zu entnehmen. Dieser setzt sich aus der Spannschraube 14 und dem Haltering 15 zusammen, wobei der mit der Grundaufnahme 2 verschraubte Haltering 15 die Spannschraube 14 an der Grundaufnahme 2 sichert und beim Einspannen von Werkzeughaltern 10, 10' und beim Arbeiten entstehende Kräfte aufnimmt. Die Spannschraube 14 ragt mit einem Verbindungsabschnitt in die Aufnahmeausnehmung 7 hinein, und wird beim Einspannen eines Werkzeughalters 10, 10' in einer Gewindebohrung 26 des jeweiligen Einspannschaftes 23 festgesetzt. Dabei wird der Werkzeughalter 10, 10' mit der Spannschraube 14 und dem Haltering 15 gegen den Verzahnring 8 in der Aufnahmeausnehmung 7 festgezogen. Um einen optimierten Sitz des Werkzeughalters 10, 10' zu ermöglichen, kann zudem eine Anlaufscheibe 27 zwischen Grundaufnahme 2 und Spannschraube 14 vorgesehen sein. Zudem ist der Fig. 7 in der Grundaufnahme 2 eine Kühlwasserzuleitung 28 im Bereich der Nut 24 des Einspannschaftes 23 zu entnehmen.

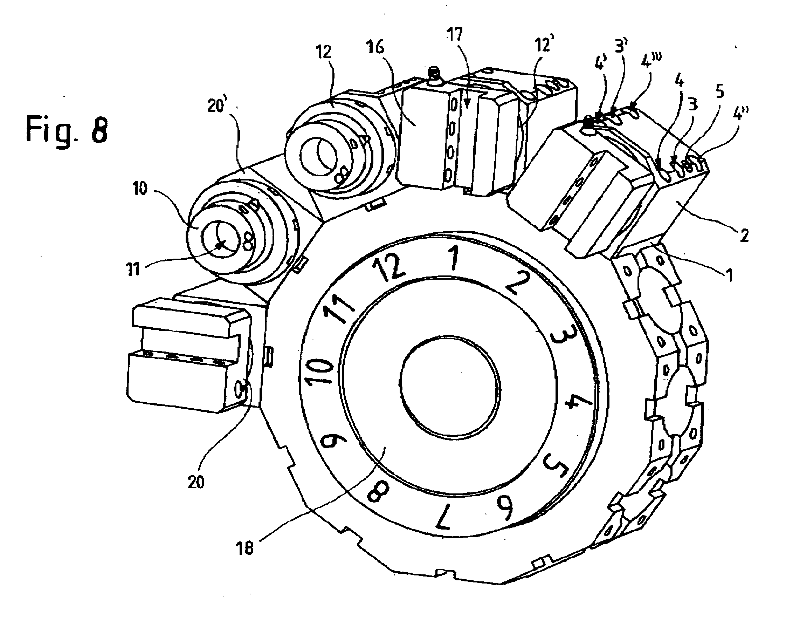

Aus Fig. 8 geht schließlich ein Werkzeugrevolver 18 mit zwölf Stationen und an den Stationen befestigten Werkzeugschnellspannvorrichtungen 20, 20' hervor, wobei drei Werkzeugschnellspannvorrichtungen 20 mit einem als Wendeplattenhalteraufnahme 16 ausgebildeten Werkzeughalter 10' und zwei Werkzeugschnellspannvorrichtungen 20' mit einem Werkzeughalter 10 mit einer Bohrstangenaufnahme 11 ausgerüstet sind. Die restlichen sieben Stationen 19 für Werkzeugschnellspannvorrichtungen 20, 20' sind nicht besetzt, wobei hier auch andere Werkzeugschnellspannvorrichtungen mit zum Beispiel drehenden Werkzeugen angebracht werden könnten.

## Patentansprüche

1. Werkzeugschnellspannvorrichtung für einen Werkzeugrevolver (18) einer Drehmaschine mit einer dem Werkzeugrevolver (18) zugeordneten Grundaufnahme (2) und einem der Grundaufnahme (2) zugeordneten Satz feststehend aufnehmbarer Werkzeughalter (10, 10'),
**dadurch gekennzeichnet,**
**dass** der Grundaufnahme (2) eine Revolveradapterplatte (1) zugeordnet ist, und
**dass** zwischen der Revolveradapterplatte (1) und der Grundaufnahme (2) eine Feinverstellung ausgebildet ist, so dass die Grundaufnahme unabhängig von dem Werkzeugrevolver zu der Revolveradapterplatte verschoben werden kann.

2. Werkzeugschnellspannvorrichtung nach Anspruch 1, **dadurch gekennzeichnet, dass** der Grundaufnahme (2) und der Revolveradapterplatte (1) Revolververbindungsmittel (4, 4', 4", 4'") und von den Revolververbindungsmitteln (4, 4', 4", 4"') unabhängige Grundaufnahmefestsetzmittel (3, 3') zugeordnet sind.

3. Werkzeugschnellspannvorrichtung nach einem der Ansprüche 1 oder 2, **dadurch gekennzeichnet, dass** die Feinverstellung wenigstens eine Exzenterschraube (5) aufweist.

4. Werkzeugschnellspannvorrichtung nach Anspruch 3, **dadurch gekennzeichnet, dass** die Exzenterschraube (5) mit einer Madenschraube (6) an der Grundaufnahme (2) gesichert ist.

5. Werkzeugrevolver einer Drehmaschine an den wenigstens eine Werkzeugschnellspannvorrichtung (20) ansetzbar ist,
**dadurch gekennzeichnet,**
**dass** die Werkzeugschnellspannvorrichtung (20) nach einem der Ansprüche 1 bis 4 ausgebildet ist.

6. Drehmaschine mit wenigstens einem Werkzeugrevolver (18),
**dadurch gekennzeichnet,**
**dass** der Werkzeugrevolver (18) wenigstens eine Werkzeugschnellspannvorrichtung (20) nach einem der Ansprüche 1 bis 4 aufweist.

## Claims

1. A quick clamping device for a tool for a turret (18) of a lathe comprising a base receptacle (2) assigned to the turret (18) and a set of fixedly receivable tool holders (10, 10') assigned to the base receptacle (2),
**characterized in**
**that** a turret adapter plate (1) is assigned to the base receptacle (2) and
**that** a fine adjustment is embodied between the turret adapter plate (1) and the base receptacle (2), so that the base receptacle can be displaced to the turret adapter plate independent from the turret.

2. The quick clamping device for a tool according to claim 1, **characterized in that** turret connection means (4, 4', 4", 4"') and base receptacle fixing means (3, 3'), which are independent from the turret connection means (4, 4', 4", 4"'), are assigned to the base receptacle (2) and to the turret adapter plate (1).

3. The quick clamping device for a tool according to one of claims 1 or 2, **characterized in that** the fine adjustment has at least one eccentric screw (5).

4. The quick clamping device for a tool according to claim 3, **characterized in that** the eccentric screw (5) is secured to the base receptacle (2) by means of a grub screw (6).

5. A turret of a lathe, to which at least one quick clamping device for a tool (20) can be attached,
**characterized in**
**that** the quick clamping device for a tool (20) is embodied according to one of claims 1 to 4.

6. A lathe comprising at least one turret (18),
**characterized in**
**that** the turret (18) has at least one quick clamping device for a tool (20) according to one of claims 1 to 4.

## Revendications

1. Dispositif de serrage rapide d'outil pour une tourelle porte-outils revolver (18) d'un tour avec un porte-outil de base (2) affectée à la tourelle porte-outil revolver (18) et un ensemble de porte-outils (10, 10') pouvant être logé de façon fixe, affecté au porte-outil de base, pour lequel le porte-outil de base (2),
**caractérisé en ce**
**qu'**une plaque d'adaptateur de tourelle porte-outils revolver (1) est affectée au porte-outil de base (2), et
en ce qu'un réglage précis est constitué entre la plaque d'adaptateur de tourelle porte-outils revolver (1) et le porte-outil de base (2) de sorte que le porte-outil de base peut être déplacé indépendamment de la tourelle porte-outils revolver par rapport à la plaque d'adaptateur de tourelle porte-outils revolver.

2. Dispositif de serrage rapide d'outil selon la revendication 1, **caractérisé en ce que** des moyens de raccordement de tourelle porte-outils revolver (4, 4', 4'', 4''') et des moyens de fixation de porte-outil de base (3, 3') indépendants des moyens de raccordement de tourelle porte-outils revolver (4, 4', 4" , 4"') sont attribués au porte-outil de base (2) et à la plaque d'adaptateur de tourelle porte-outils revolver (1).

3. Dispositif de serrage rapide d'outil selon l'une quelconque des revendications 1 ou 2, **caractérisé en ce que** le réglage précis comporte au moins une vis excentrique (5).

4. Dispositif de serrage rapide d'outil selon la revendication 3, **caractérisé en ce que** la vis excentrique (5) est fixée avec une vis sans tête (6) au porte-outil de base (2).

5. Tourelle porte-outils revolver d'un tour sur lequel un dispositif de serrage rapide d'outil (20) peut être monté,
**caractérisé en ce**
**que** le dispositif de serrage rapide d'outil (20) est constitué selon l'une quelconque des revendications 1 à 4.

6. Tour avec au moins une tourelle porte-outils revolver (18),
**caractérisé en ce**
**que** la tourelle porte-outils revolver (18) comporte au moins un dispositif de serrage rapide d'outil (20) selon l'une quelconque des revendications 1 à 4.
